# EUROPEAN PATENT APPLICATION

(11) **EP 4 834 675 A1**
(43) Date of publication of application: **04.11.2026**
(21) Application number: 24906405.6
(22) Date of filing: 18.12.2024
(51) Int. Cl.: B60S 1/08

(54) **WINDSHIELD WIPER CONTROL METHOD AND APPARATUS, DEVICE, MEDIUM, AND VEHICLE**

(30) Priority: 20.12.2023 CN 202311768611
(71) Applicant: Shanghai Lixiang Automobile Co., Ltd., Shanghai 201800 (CN)
(72) Inventor: ZHANG, Hongyue, Shanghai 201800 (CN); MA, Jia, Shanghai 201800 (CN); HU, Haibo, Shanghai 201800 (CN); WANG, Jialiang, Shanghai 201800 (CN); LI, Jingxin, Shanghai 201800 (CN); WEI, Peng, Shanghai 201800 (CN)
(74) Representative: 2SPL Patentanwälte PartG mbB
(86) International application number: PCT/CN2024/140317
(87) International publication number: WO 2025/130926

(57) **Abstract**

A windshield wiper control method, comprising: acquiring driving state information of a vehicle, wherein the driving state information at least comprises the driving speed of the vehicle and the acceleration of the vehicle; acquiring original control information of a windshield wiper, wherein the original control information at least comprises the original sensitivity of an automatic windshield wiper and a first cyclic wiping threshold corresponding to a current rainfall; adjusting the original control information on the basis of the driving state information to obtain compensation control information, wherein the compensation control information at least comprises an adjusted sensitivity of the automatic windshield wiper and an adjusted cyclic wiping threshold; and on the basis of the compensation control information, controlling the windshield wiper to work. Further provided are a windshield wiper control apparatus, an electronic device, a computer non-volatile readable storage medium, and a vehicle. The driving speed and the acceleration of a vehicle are introduced into automatic windshield wiper control logic, and the sensitivity of an automatic windshield wiper and a cyclic wiping threshold are correspondingly adjusted on the basis of different driving speeds and accelerations, so that the difference between windshield wiper control strategies respectively corresponding to a rainfall perceived by a user and an actual rainfall and caused by the vehicle driving state is compensated for, and the requirement of a customer for the automatic windshield wiper under a current vehicle speed and rainfall is satisfied, thereby improving the driving experience of the user, and guaranteeing the driving safety.

## Description

### CROSS-REFERENCE TO THE RELATED APPLICATION

The present application claims priority to Chinese patent application No. 202311768611.6, entitled "WINDSHIELD WIPER CONTROL METHOD AND APPARATUS, DEVICE, MEDIUM AND VEHICLE", filed before the China National Intellectual Property Administration (CNIPA) on December 20, 2023, the entire contents of which are incorporated herein by reference.

### TECHNICAL FIELD

The present application relates to the field of automatic control technology, and in particular, to a wiper control method and apparatus, a device, a medium and a vehicle.

### BACKGROUND

When a vehicle travels in rainy conditions, rain drops falling on the front windshield will obstruct the driver's line of sight. Wipers can scrape off raindrops or water marks on the front windshield to ensure good driving visibility.

With the development of intelligent vehicle control technology, automatic wipers have become increasingly widespread. In the related art, automatic wipers automatically adjust the wiping frequency according to rainfall amount, which enables the driver to automatically regulate the working state of the wiper during rainy driving and improve the driver's intelligent driving experience.

However, when the vehicle speed increases, the driver visually perceives an increase in rainfall amount, while the actual rainfall amount does not change. Accordingly, the wiping frequency of the automatic wiper remains unchanged, causing the driver to visually perceive deteriorating visibility, resulting in poor driving experience and even affecting driving safety.

### SUMMARY

To solve the above technical problems, the present application provides a wiper control method and apparatus, a device, a medium and a vehicle, so as to meet the driver's demand for automatic wipers under the current vehicle speed and rainfall, improve the driver's driving experience, and ensure driving safety.

In a first aspect, some embodiments of the present application provide a wiper control method, including:
acquiring driving state information of a vehicle, where the driving state information at least includes a driving speed and an acceleration of the vehicle;
acquiring initial control information of a wiper, where the initial control information at least includes an initial sensitivity of the automatic wiper and a first cyclic wiping threshold corresponding to current rainfall amount;
obtaining compensated control information by adjusting, based on the driving state information, the initial control information, the compensated control information at least includes an adjusted sensitivity of the automatic wiper and an adjusted cyclic wiping threshold; and
controlling the wiper to operate based on the compensated control information.

In some embodiments, the obtaining compensated control information by adjusting, based on the driving state information, the initial control information includes:
when the driving speed is less than a first speed threshold, reducing the initial sensitivity of the automatic wiper, and increasing the first cyclic wiping threshold to a second cyclic wiping threshold.

In some embodiments, the obtaining compensated control information by adjusting, based on the driving state information, the initial control information includes:
when the driving speed is greater than or equal to the first speed threshold and less than a second speed threshold, taking the initial control information as the compensated control information, the second speed threshold is greater than the first speed threshold.

In some embodiments, the obtaining compensated control information by adjusting, based on the driving state information, the initial control information includes:
when the driving speed is greater than or equal to the second speed threshold, increasing the initial sensitivity of the automatic wiper, and reducing the first cyclic wiping threshold to a third cyclic wiping threshold.

In some embodiments, the compensated control information further includes single wiping control information, the obtaining compensated control information by adjusting, based on the driving state information, the initial control information includes:
when the driving speed is lower than a third speed threshold and the acceleration is greater than an acceleration threshold, generating the single wiping control information in response to accumulated rainfall within a preset time being greater than a fourth cyclic wiping threshold, wherein the third speed threshold is less than the first speed threshold, the fourth cyclic wiping threshold is less than the second cyclic wiping threshold, and the single wiping control information is used for controlling the wiper to perform a single wiping action.

In some embodiments, the obtaining compensated control information by adjusting, based on the driving state information, the initial control information further includes:
when the automatic wiper is in an intermittent wiping mode, starting timing from a last wiping action;
generating the single wiping control information if the driving speed is less than the third speed threshold and the acceleration is greater than the acceleration threshold after a preset time elapses.

In some embodiments, before acquiring the driving state information of the vehicle, the method further includes:
performing simulation according to a real vehicle glass model and an Eulerian raindrop model to obtain raindrop adhesion state information, the raindrop adhesion state information includes influences of rainfall and vehicle speed on an adhesion state of the raindrop on glass.

In some embodiments, the raindrop adhesion state information includes first adhesion state information and second adhesion state information;
the performing simulation according to the real vehicle glass model and the Eulerian raindrop model to obtain raindrop adhesion state information includes:
importing the real vehicle glass model and establishing Eulerian raindrops with multiple preset volumes, controlling the Eulerian raindrop model to drop onto a surface of the real vehicle glass model at a preset falling speed to obtain the first adhesion state information; the Eulerian raindrops with multiple preset volumes correspond to multiple rainfall amounts respectively, and the first adhesion state information comprises adhesion states of raindrops on glass under different rainfall amounts; and
controlling the real vehicle glass model to move at multiple preset vehicle speeds, and controlling the Eulerian raindrop model to drop onto the surface of the real vehicle glass model at the preset falling speed to obtain the second adhesion state information, wherein the second adhesion state information comprises adhesion states of raindrops on glass under different vehicle speeds.

In a second aspect, some embodiments of the present application provide a wiper control apparatus, including:
a first acquisition module, configured to acquire driving state information of a vehicle, where the driving state information at least includes a driving speed and an acceleration of the vehicle;
a second acquisition module, configured to acquire initial control information of a wiper, where the initial control information at least includes an initial sensitivity of the automatic wiper and a first cyclic wiping threshold corresponding to current rainfall amount;
a compensation module, configured to obtain compensated control information by adjusting, based on the driving state information, the initial control information, where the compensated control information at least includes an adjusted sensitivity of the automatic wiper and an adjusted cyclic wiping threshold; and
a control module, configured to control the wiper to operate based on the compensated control information.

In a third aspect, some embodiments of the present application provide an electronic device, including:
a memory;
a processor; and
a computer program;
where the computer program is stored on the memory and configured to be executed by the processor to implement the method according to the first aspect.

In a fourth aspect, some embodiments of the present application provide a non-volatile computer-readable storage medium, on which a computer program is stored; the computer program, when executed by a processor, implements the method according to the first aspect.

In a fifth aspect, some embodiments of the present application provide a vehicle, including the foregoing apparatus, electronic device, or non-volatile computer-readable storage medium.

According to the wiper control method, apparatus, device, medium and vehicle provided by some embodiments of the present application, the driving speed and acceleration of the vehicle are introduced into the control logic of the automatic wiper. The sensitivity and cyclic wiping threshold of the automatic wiper are adjusted based on different driving speeds and accelerations, so as to compensate the difference between wiper control strategies corresponding to the user-perceived rainfall and the actual rainfall caused by the driving state of the vehicle. The present application meets the user's demand for automatic wipers under the current vehicle speed and rainfall, improves the user's driving experience, and ensures driving safety.

### BRIEF DESCRIPTION OF THE DRAWINGS

The accompanying drawings described below are incorporated into the specification and constitute a part of the specification, illustrate embodiments consistent with the present disclosure, and together with the specification serve to explain the principles of the present disclosure.

In order to describe technical solutions of the embodiments of the present disclosure or the related art more clearly, the accompanying drawings used in the illustration of the embodiments or the related art will be briefly introduced. Apparently, those skilled in the art may obtain other accompanying drawings based on these accompanying drawings without paying any creative effort.
FIG. 1 is a flowchart of a wiper control method provided by some embodiments of the present application;
FIG. 2 is a schematic diagram of an application scenario provided by some embodiments of the present application;
FIG. 3 is a flowchart of a wiper control method provided by another embodiment of the present application;
FIG. 4 is a schematic diagram of force analysis of raindrops on an inclined surface according to some embodiments of the present application;
FIG. 5 is a schematic diagram of a simulation model provided by some embodiments of the present application;
FIG. 6 is a schematic diagram of raindrop morphology from a macroscopic perspective according to some embodiments of the present application;
FIG. 7 is a schematic diagram of raindrop morphology from a local perspective according to some embodiments of the present application;
FIG. 8 is a schematic diagram of a fitting curve for a critical value of water droplet adhesion state provided by some embodiments of the present application;
FIG. 9 is a schematic structural diagram of a wiper control apparatus provided by some embodiments of the present application; and
FIG. 10 is a schematic structural diagram of an electronic device provided by some embodiments of the present application.

### DETAILED DESCRIPTION

To make objectives, solutions and advantages of the present disclosure clearer, a further description for solutions of the present disclosure will be given below. It should be noted that embodiments of the present application and features thereof may be combined without conflict.

In the following description, numerous specific details are set forth to provide a thorough understanding of the present application. However, the present application may be implemented in other manners different from those described herein. Apparently, some embodiments described in the specification are merely part of the embodiments of the present application, rather than all embodiments.

Some embodiments of the present application provide a wiper control method, which will be described below in conjunction with specific embodiments.

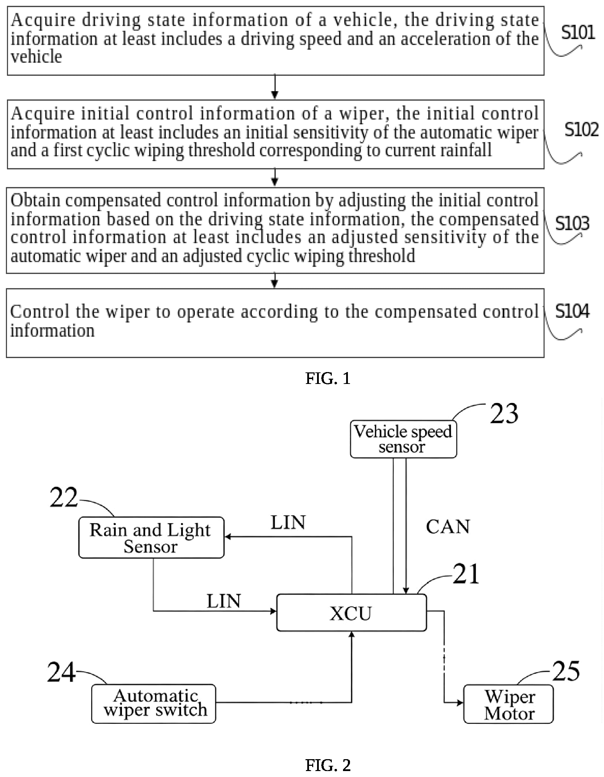

FIG. 1 is a flowchart of a wiper control method provided by some embodiments of the present application. The method may be applied to the intelligent driving scenario as shown in FIG. 2. The scenario includes a domain controller (XCU) 21 configured for controlling various functions of a vehicle, a rain and light sensor 22 for sensing rainfall amount, a vehicle speed sensor 23 for collecting information of vehicle's driving speed and acceleration, an automatic wiper switch 24 for enabling an automatic wiper function, and a wiper motor 25 for driving the wiper. These components perform data transmission via a LIN (Local Interconnect Network) bus, a CAN (Controller Area Network) bus, or other in-vehicle communication methods. It is understandable that the wiper control method provided by some embodiments of the present application may also be applied to other scenarios.

The wiper control method shown in FIG. 1 is described below in combination with the scenario shown in FIG. 2, and the method includes steps described below.

At S101, driving state information of a vehicle is acquired, and the driving state information at least includes a driving speed and an acceleration of the vehicle.

The vehicle is equipped with various sensors for collecting the driving state information of the vehicle, such as a vehicle speed sensor for collecting the driving speed and acceleration of the vehicle. Alternatively, the current driving speed and acceleration of the vehicle may also be acquired in real time through control information of a vehicle-mounted terminal, which is not limited in some embodiments of the present application.

At S102, initial control information of the wiper is acquired, and the initial control information at least includes an initial sensitivity of the automatic wiper and a first cyclic wiping threshold corresponding to current rainfall amount.

The current rainfall amount is collected by a rain and light sensor.

The initial control information of the wiper conforms to the initial control strategy of the automatic wiper, and at least includes the initial sensitivity of the automatic wiper and the first cyclic wiping threshold corresponding to the current rainfall amount. The current rainfall amount is collected by a Rain and Light Sensor (RLS). The rain and light sensor is configured to perceive relevant information about current rainfall amount, so that the domain controller can determine the current rainfall level and select the corresponding initial sensitivity of the automatic wiper and the first cyclic wiping threshold.

Upon accumulated rainfall amount reaches the first cyclic wiping threshold, the automatic wiper performs one wiping action. That is, the lower the first cyclic wiping threshold, the higher the wiping frequency of the automatic wiper; the higher the first cyclic wiping threshold, the lower the wiping frequency of the automatic wiper.

Different initial sensitivities of the automatic wiper correspond to different working modes of the automatic wiper, and the first cyclic wiping threshold of the automatic wiper differs in different working modes. For example, under the same rainfall amount in an actual environment, the higher initial sensitivity of the automatic wiper, the lower the corresponding first cyclic wiping threshold, and the lower initial sensitivity, the higher the corresponding first cyclic wiping threshold.

At S103, the initial control information is adjusted based on the driving state information to obtain compensated control information, and the compensated control information at least includes adjusted sensitivity of the rain and light sensor and an adjusted cyclic wiping threshold.

Based on the Ebbinghaus illusion theory, visual prominence effect, and different light transmittance brightness corresponding to different raindrop states, it is inferred that the perception of increased rainfall by humans during vehicle acceleration is caused by human cognitive bias. For instance, although the actual rainfall amount remains unchanged, vehicle acceleration causes more raindrops to accumulate on the front windshield without timely dispersion, thereby obstructing the line of sight and giving drivers and passengers an illusion of heavier rainfall.

In this case, the driver's needs can not be met if the automatic wiper operates according to the initial control information determined based on current rainfall amount. It is necessary to adjust the initial control information to compensate for the difference between the actual rainfall amount and human perceived rainfall amount.

In some embodiments, when it is sensed by the rain and light sensor that the actual rainfall amount remains unchanged and the vehicle speed rises to a high-speed range, it is required to increase the sensitivity of the automatic wiper and reduce the first wiping threshold to increase the wiping frequency of the automatic wiper; when the vehicle speed drops to a low-speed range, it is required to reduce the sensitivity of the automatic wiper and increase the first wiping threshold.

In some embodiments, when the rain and light sensor senses a change in actual rainfall amount accompanied by a change in vehicle speed, the domain controller adjusts the sensitivity of the automatic wiper, so as to determine the first wiping threshold corresponding to the current rainfall amount according to different sensitivities of the automatic wiper. Meanwhile, adjustment is made on the basis of the first wiping threshold corresponding to the current rainfall amount to compensate for the difference between actual rainfall amount and human perceived rainfall amount.

At S104, the wiper is controlled to operate based on the compensated control information.

The compensated control information is the initial control information that has undergone compensation, which is more in line with the automatic wiper control demand corresponding to the driver's perception of current rainfall amount.

Specifically, the domain controller controls the wiper motor based on the compensated control information, so that the wiper motor drives the wiper to perform wiping actions based on the compensated control information.

In the embodiments of the present application, driving state information of a vehicle is acquired, where the driving state information at least includes the driving speed and acceleration of the vehicle; initial control information of the wiper is acquired, where the initial control information at least includes the initial sensitivity of the automatic wiper and a first cyclic wiping threshold corresponding to current rainfall amount; the initial control information is adjusted based on the driving state information to obtain compensated control information, where the compensated control information at least includes adjusted sensitivity of the automatic wiper and an adjusted cyclic wiping threshold; and the wiper is controlled to operate based on the compensated control information. By introducing the driving speed and acceleration of the vehicle into the control logic of the automatic wiper, the control information of the automatic wiper is adjusted based on different driving speeds and accelerations, so as to compensate the difference between wiper control strategies corresponding to user-perceived rainfall amount and actual rainfall amount caused by the vehicle driving state. The present application meets the user's demand for automatic wipers under current vehicle speed and rainfall amount, improves driving experience, and ensures driving safety.

In some embodiments, the step, in which the initial control information is adjusted based on the driving state information to obtain the compensated control information, includes: when the driving speed is less than a first speed threshold, reducing the initial sensitivity of the automatic wiper, and increasing the first cyclic wiping threshold to a second cyclic wiping threshold.

When the driving speed of the vehicle is less than the first speed threshold, it indicates that the vehicle is running at a low speed. Therefore, the initial sensitivity of the automatic wiper is reduced, and the first cyclic wiping threshold corresponding to the current rainfall amount at the low sensitivity is increased to the second cyclic wiping threshold. Since the second cyclic wiping threshold is greater than the first cyclic wiping threshold, the automatic wiper will perform wiping only after cumulatively sensing more rainfall, thereby reducing the wiping frequency of the automatic wiper. This is consistent with the requirement for a lower wiping frequency under low-speed vehicle driving conditions.

For example, the sensitivity of the automatic wiper is reduced by one level relative to the initial sensitivity issued by the domain controller.

In some embodiments, the step, in which the initial control information is adjusted based on the driving state information to obtain compensated control information, includes: when the driving speed is greater than or equal to the first speed threshold and less than a second speed threshold, taking the initial control information as the compensated control information, where the second speed threshold is greater than the first speed threshold.

When the driving speed of the vehicle is greater than or equal to the first speed threshold and less than the second speed threshold, it indicates that the vehicle is in a medium-speed driving state, and the initial control information may be directly used as the compensated control information to control the operation of the automatic wiper.

In some embodiments, the step, in which the initial control information is adjusted based on the driving state information to obtain compensated control information, includes: when the driving speed is greater than or equal to the second speed threshold, increasing the initial sensitivity of the automatic wiper, and reducing the first cyclic wiping threshold to a third cyclic wiping threshold.

When the driving speed of the vehicle is greater than or equal to the second speed threshold, it indicates that the vehicle is in a high-speed driving state. In this case, the rainfall perceived by the driver is higher than the actual rainfall in the environment, and a higher wiping frequency of the automatic wiper is required. Accordingly, the sensitivity of the automatic wiper is increased, and the first cyclic wiping threshold corresponding to the current rainfall amount is reduced to the third cyclic wiping threshold.

For example, the sensitivity of the automatic wiper is increased by one level relative to the initial sensitivity issued by the domain controller.

In the embodiments of the present application, different wiper control information compensation strategies are respectively set for operating conditions of the vehicle in low-speed, medium-speed and high-speed ranges. This enables the wiping performance of the automatic wiper to not only satisfy the fundamental requirements of slow wiping at low speeds and fast wiping at high speeds, but also to further converge with the driver's subjective perception of current rainfall amount. The technical solution thereby addresses the mismatch between the response speed of the automatic wiper and the rainfall perceived by the driver, and improves the user's driving and riding experience.

In some embodiments, the compensated control information further includes single wiping control information. The step, in which the initial control information is adjusted based on the driving state information to obtain compensated control information, further includes: when the driving speed is less than a third speed threshold and the acceleration is greater than an acceleration threshold, if the accumulated rainfall within a preset time is greater than a fourth cyclic wiping threshold, generating single wiping control information, where the third speed threshold is less than the first speed threshold, the fourth cyclic wiping threshold is less than the second cyclic wiping threshold, and the single wiping control information is used to control the wiper to perform a single wiping action.

When the rainfall amount per unit time is conserved, the rainfall amount Q received by the windshield is calculated as follows: $\begin{matrix}Q = St \left[\left({V}_{0}+at sinθ\right)+{V}_{wind}\right] \\ {\int }_{t}^{t + Δ t} Q = {\int }_{t}^{t + Δ t} St \left[\left({V}_{0}+atsinθ\right)+{V}_{wind}\right] dt\end{matrix}$ where *V*₀ is an initial speed of the vehicle, *a* is the acceleration of the vehicle, S is the area of the windshield, *t* is the time, *θ* is an inclination angle of the windshield, *V_{wind}* is the wind speed. It can be concluded that when the rainfall amount per unit time is conserved, an increase in acceleration will lead to an increase in rainfall amount. Therefore, when the vehicle suddenly accelerates after being stationary for a period of time, the amount of rainwater adhering to the vehicle glass increases abruptly, while the automatic wiper fails to act in a timely manner, causing the driver's line of sight to be obstructed. Accordingly, the third speed threshold is set to be less than the first speed threshold. When the vehicle is in a low-speed driving state and the driving speed is less than the third speed threshold, it is further determined whether the acceleration of the vehicle is greater than the acceleration threshold. If the acceleration of the vehicle is greater than the acceleration threshold, it indicates that the vehicle is currently in a state of initial launch or rapid acceleration. At this time, if the compensation strategy for low-speed driving is adopted, that is, reducing the initial sensitivity of the automatic wiper and increasing the first cyclic wiping threshold to the second cyclic wiping threshold, then the situation of the driver's line of sight being obstructed cannot be improved. To solve this problem, when the driving speed is less than the third speed threshold and the acceleration is greater than the acceleration threshold, if the accumulated rainfall amount within a preset time is greater than the fourth cyclic wiping threshold, the single wiping control information is generated so as to directly control the automatic wiper to perform a single wiping action. That is, when the accumulated rainfall within the preset time is excessively large, the automatic wiper is directly controlled to perform a single wiping action. The fourth cyclic wiping threshold is less than the second cyclic wiping threshold.

In some embodiments, when the driving speed is less than the third speed threshold, it is further determined whether the acceleration of the vehicle is greater than the acceleration threshold. If the acceleration of the vehicle is less than or equal to the acceleration threshold, it indicates that the vehicle is in a normal low-speed driving state, and the initial sensitivity of the automatic wiper is reduced and the first cyclic wiping threshold is increased to the second cyclic wiping threshold in accordance with the compensation strategy for low-speed driving.

On the basis of some of the above embodiments, when the automatic wiper is in an intermittent wiping mode, timing starts from the last wiping action; if the driving speed is less than the third speed threshold and the acceleration is greater than the acceleration threshold after a preset time, the single wiping control information is generated.

When the automatic wiper is in the intermittent wiping mode, timing starts from the last wiping action. If there is no further wiping action within the preset time, and the driving speed is less than the third speed threshold and the acceleration is greater than the acceleration threshold, the single wiping control information is generated to directly control the automatic wiper to perform a single wiping action. It should be noted that this strategy is used for automatic wiper control in the intermittent mode, and this strategy does not need to judge whether the accumulated rainfall amount reaches the rainfall threshold.

In some embodiments of the present application, whether the vehicle has an abrupt acceleration behavior is determined by comprehensively evaluating the vehicle driving speed and acceleration. If abrupt acceleration occurs, the automatic wiper is controlled to perform a single wiping action according to the accumulated rainfall within the preset time, so as to avoid the problem of slow response of the automatic wiper caused by the difference between the actual rainfall amount and the perceived rainfall amount due to speed changes in a short time, and meet the user's demand for the automatic wiper to the greatest extent.

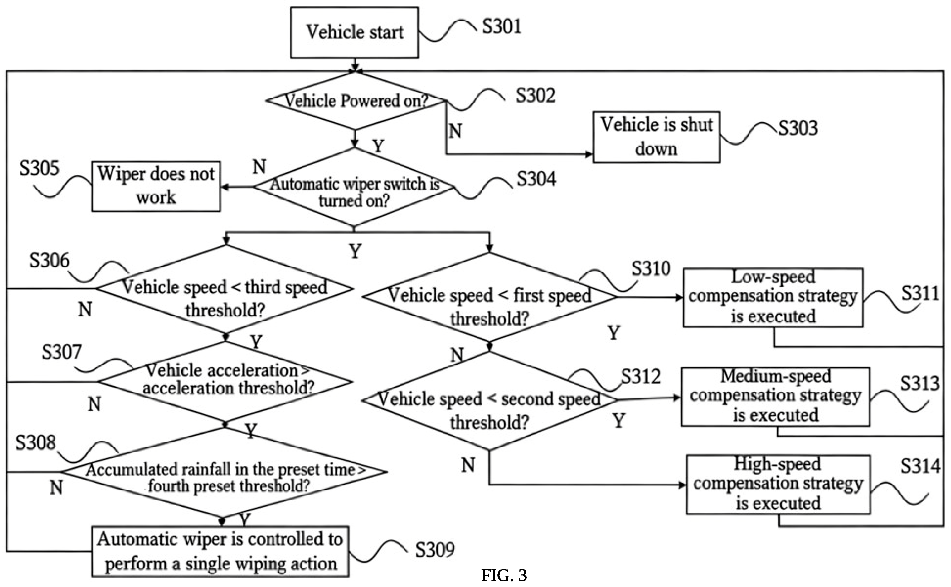

FIG. 3 is a flowchart of a wiper control method provided by some other embodiments of the present application. As shown in FIG. 3, the method includes steps described below.

At S301, the vehicle is started.

At S302, it is determined whether the vehicle is powered on. If yes, the process proceeds to execute S304; if no, the process proceeds to execute S303.

At S303, the vehicle is shut down.

At S304, it is determined whether the automatic wiper switch is turned on. If yes, the process proceeds to execute S306-S307; if no, the process proceeds to execute S305.

At S305, the automatic wiper does not work.

At S306, it is determined whether the vehicle speed is less than the third speed threshold. If yes, the process proceeds to execute S307; if no, the process returns to execute S302.

At S307, it is determined whether the vehicle acceleration is greater than the acceleration threshold. If yes, the process proceeds to execute S308; if no, the process returns to execute S302.

At S308, it is determined whether the accumulated rainfall within the preset time is greater than the fourth preset threshold. If yes, the process proceeds to execute S309; if no, the process returns to execute S302.

At S309, the automatic wiper is controlled to perform a single wiping action.

At S310, it is determined whether the vehicle speed is less than the first speed threshold. If yes, the process proceeds to execute S311; if no, the process proceeds to execute S312.

At S311, the low-speed compensation strategy is executed.

Specifically, the low-speed compensation strategy includes reducing the initial sensitivity of the automatic wiper and increasing the first cyclic wiping threshold to the second cyclic wiping threshold.

At S312, it is determined whether the vehicle speed is less than the second speed threshold. If yes, the process proceeds to execute S313; if no, the process proceeds to execute S314.

At S313, the medium-speed compensation strategy is executed.

Specifically, the medium-speed compensation strategy includes taking the initial control information as the compensated control information, and the second speed threshold is greater than the first speed threshold.

At S314, the high-speed compensation strategy is executed.

Specifically, the high-speed compensation strategy includes increasing the initial sensitivity of the automatic wiper and reducing the first cyclic wiping threshold to the third cyclic wiping threshold.

Specifically, the implementation process and principle of each of the above steps are consistent with those of the method in some of the above embodiments, and will not be repeated here.

In some embodiments of the present application, the vehicle speed and acceleration are introduced into the control logic of the automatic wiper. The control information of the automatic wiper is adjusted differently according to varying vehicle speeds, so as to compensate for the difference between wiper control strategies corresponding to the actual rainfall amount and the rainfall amount perceived by the user. Meanwhile, the vehicle speed and acceleration are comprehensively adopted to determine whether the vehicle is in an abrupt acceleration state. If abrupt acceleration occurs, the automatic wiper is controlled to perform a single wiping action according to the accumulated rainfall amount within a preset period. This avoids the slow response of the automatic wiper caused by the difference between the actual rainfall amount and the perceived rainfall amount due to speed changes in a short time, fully satisfies user requirements for the automatic wiper, improves the driving experience, and guarantees driving safety.

On the basis of some of the above embodiments, the user's perception of rainfall amount is related to the adhesion state of raindrops on the glass. The process of verifying the influence of vehicle speed on the adhesion state of raindrops on the glass through simulation is introduced below in conjunction with specific embodiments.

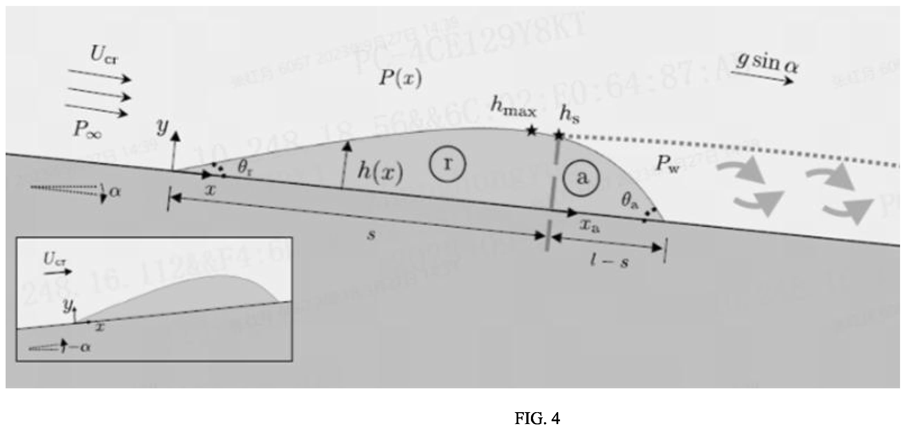

FIG. 4 is a schematic diagram of force analysis of raindrops on an inclined surface provided by some embodiments of the present application. As shown in FIG. 4, during the traveling process of the vehicle, wind resistance is mainly caused by the vehicle speed, thus the corresponding vehicle speed is calculated through the magnitude of the wind resistance. Neglecting the gravity and shear force of the liquid droplets, the net adhesion force F_{adh} is balanced with the wind resistance F_{w}, and the relationship between the wind resistance F_{w} and the vehicle speed U_{cr} is expressed as: $\frac{{C}_{D}}{2} {ρ}_{a} {U}_{cr}^{2} {h}_{0} {l}_{0} = {Cσl}_{0} \left({cosθ}_{r}-{cosθ}_{a}\right)$ where, *C_{D}* denotes a drag coefficient, which is related to the characteristic area, surface smoothness and overall shape of an object; *ρₐ* denotes air density, taken as 1.29 Kg/m³ (kilograms per cubic meter); *U_{CR}* denotes the wind speed or vehicle speed, and the wind speed is approximately equal to the vehicle speed during the movement of the vehicle; *h*₀ denotes the height of the raindrop on the plane; *l*₀ is the width of the raindrop on a planar surface; *C* denotes a geometric factor, which is used to integrate a contact angle curve; σ denotes the surface tension coefficient of water, for example, it takes a value of 72.8 mN/m (millinewtons per meter) on a 20° inclined plane; *cosθᵣ* denotes the minimum contact angle between the raindrop and the inclined plane; *cosθₐ* denotes the maximum contact angle between the raindrop and the inclined plane. According to the above formula, it can be concluded that an increase in the volume of raindrops will lead to a decrease in the critical wind speed at which raindrops remain stationary on the inclined plane.

The states of raindrops falling on the surface of a vehicle windshield are mainly classified as stationary, sliding downward, and sliding upward. By considering the state where the raindrop remains stationary on the inclined surface of the windshield, the force balance of the differential control volume inside the raindrop in the inclined direction of the glass is calculated as: $ρgsin α - p ′ \left(x\right) = 0$ $p ′ \left(x\right) = P ′ \left(x\right) - σh ‴ \left(x\right) + ρhg ′ \left(x\right) cosα$ $P ′ \left(x\right) = - {ρ}_{a} {U}_{cr}^{2} h ′ \left(x\right) / H$
where, ρ denotes a liquid density of the raindrop, g denotes the gravitational acceleration, α denotes an inclination angle of the windshield, *p*'(*x*) denotes an internal pressure gradient of the raindrop affected by an external pressure gradient, including the capillary force and hydrostatic pressure under the lubrication approximation; *P'*(*x*) denotes the external pressure gradient, which is calculated by the Bernoulli equation and the like; σ denotes the surface tension coefficient of water, and *H* denotes a base characteristic length for the transition from disturbed flow to uniform flow. *x* is a variable with a value ranging from 0 to the width of the droplet on the plane corresponding to the receding side, as shown in FIG. 4, with a value range of [0, s].

Based on the above calculation process of the force balance of the differential control volume inside the raindrop in the inclined direction of the glass, the raindrop is divided into a receding side (part r in FIG. 4) and an advancing side (part a in FIG. 4).

For the raindrop on the receding side, the following formula is obtained according to the force relationship: ${σh}_{r}^{‴} \left(x\right) + \left({ρ}_{a}{U}_{cr}^{2}/H-ρgcosα\right) {h}_{r}^{′} \left(x\right) + ρgsinα = 0$

In the height *hᵣ*(*x*) of the raindrop on the receding side, *x =* [0, *s*], and the corresponding boundary conditions are as follows: ${h}_{r} \left(x=0\right) = 0$ ${h}_{r} ′ \left(x=0\right) = {tanθ}_{r}$ ${h}_{r} ′ \left(x=s\right) = 0$

For the raindrop on the advancing side, the following formula is obtained according to the force relationship: ${σh}_{a} ‴ \left(x\right) - {ρgcosαh}_{a} ′ \left(x\right) + ρgsinα = 0$

In the height *hₐ*(*x*) of the raindrop on the advancing side, *x =* [0, *l - s*], and the corresponding boundary conditions are as follows: ${h}_{a} \left({x}_{a}=l-s\right) = 0$ ${h}_{a} ′ \left({x}_{a}=l-s\right) = - {tanθ}_{a}$ ${h}_{a} ′ \left({x}_{a}=0\right) = 0$

The raindrop area A is expressed as: $A = {\int }_{0}^{s} {h}_{r} dx + {\int }_{0}^{l - s} {h}_{a} {dx}_{a}$

In summary, by considering forces acting on the raindrop, such as the gravity, wind resistance, hydrostatic pressure and capillary force under lubrication approximation, and following the principle that the forces acting on the raindrop are balanced when it is stationary, the relationship between the area of the raindrop on the windshield and the vehicle speed is derived. Meanwhile, when the inclination angle *α* of the windshield is 30 degrees, the critical wind speed ranges from 70 km/h (kilometers per hour) to 80 km/h (20 m/s~22 m/s (meters per second)). Similarly, the critical wind speeds of raindrops under different glass inclination angles, different raindrop volumes, and different vehicle speeds are obtained through theoretical calculations.

Further, the adhesion state of raindrops from the moment they contact the glass is simulated by means of CAE (Computer Aided Engineering) simulation. In some embodiments, before acquiring the driving state information of the vehicle, the method further includes: performing simulation based on the real vehicle glass model and the Eulerian raindrop model to obtain raindrop adhesion state information. The raindrop adhesion state information includes the influence of rainfall amount and vehicle speed on the adhesion state of raindrops on the glass.

Specifically, the raindrop adhesion state information includes first adhesion state information and second adhesion state information. Performing simulation based on the real vehicle glass model and the Eulerian raindrop model to obtain raindrop adhesion state information includes: importing the real vehicle glass model and establishing Eulerian raindrops of multiple preset volumes, controlling the Eulerian raindrop model to drop onto the surface of the real vehicle glass model at a preset falling speed to obtain the first adhesion state information; the Eulerian raindrops of multiple preset volumes correspond to multiple rainfall amounts respectively, and the first adhesion state information includes the adhesion state of raindrops on the glass under different rainfall amounts; controlling the real vehicle glass model to move at multiple preset vehicle speeds, and controlling the Eulerian raindrops to drop onto the surface of the real vehicle glass model at a preset falling speed to obtain the second adhesion state information, where the second adhesion state information includes the adhesion state of raindrops on the glass under different vehicle speeds.

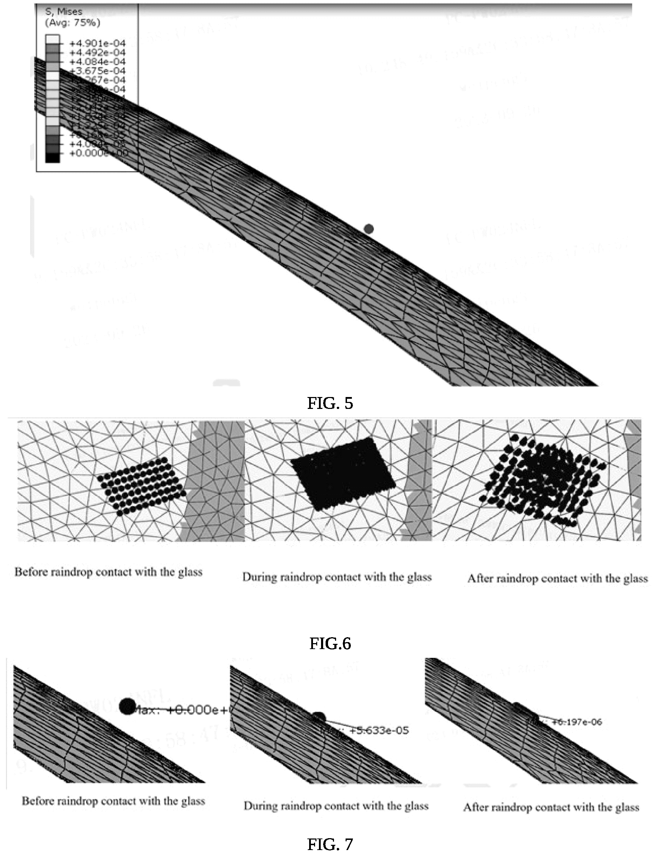

FIG. 5 is a schematic diagram of a simulation model provided by some embodiments of the present application. Simulation is performed by: importing a real vehicle glass model and establishing Eulerian raindrops with different preset volumes to simulate different rainfall amounts respectively, and defining a preset falling speed (8-9 m/s) for the Eulerian raindrop model, for example, controlling the raindrop volumes to be V1, V2, and V3, corresponding to light rain, moderate rain, and heavy rain respectively; controlling the movement speed of the real vehicle glass model to make it move at different preset vehicle speeds to simulate different preset vehicle speeds, for example, controlling the vehicle speeds to be V1 (stationary), V2 (low speed), V3 (medium speed), and V4 (high speed).

Specifically, during the simulation process, the morphology of raindrops before, during, and after contacting the glass is simulated from a macroscopic perspective and a local perspective, such as the schematic diagram of raindrop morphology from a macroscopic perspective shown in FIG. 6 and the schematic diagram of raindrop morphology from a local perspective shown in FIG. 7.

The first adhesion state information indicates the adhesion state of raindrops on the glass under different rainfall amounts; the second adhesion state information indicates the adhesion state of raindrops on the glass under different vehicle speeds. The raindrop adhesion state information, which represents the comprehensive information of the influence of rainfall amounts and vehicle speed on the adhesion state of raindrops on the glass, can be obtained by combining the first adhesion state information and the second adhesion state information.

In some embodiments, when the vehicle is in a stationary state, under light rain, raindrops exhibit a downward sliding tendency without significant displacement and present a semicircular shape; under moderate rain, raindrops exhibit a downward sliding tendency without significant displacement and present a semi-elliptical shape; under heavy rain, raindrops flow down along the glass in a liquid-film shape.

When the vehicle is in a low-speed driving state, under light rain, raindrops adhere to the glass surface and move upward in a semicircular shape; under moderate rain, raindrops adhere to the glass surface and move upward in a semicircular shape; under heavy rain, raindrops adhere to the glass surface and spread upward in a liquid-film shape. When the vehicle is in a medium-speed driving state, under light rain, the raindrops adhere to the glass surface and move upward in a semicircular shape; under moderate rain, the raindrops adhere to the glass surface and move upward, with their shape gradually tending to a liquid-film state; under heavy rain, raindrops adhere to the glass surface and move upward in a liquid-film shape.

When the vehicle is in a high-speed driving state, under light rain, the raindrops adhere to the glass surface and move upward in a semicircular shape; under moderate rain, the raindrops adhere to the glass surface and move upward in a liquid-film shape; under heavy rain, the raindrops adhere to the glass surface and move upward in a liquid-film shape.

In summary, when the vehicle is in a stationary state, small raindrops adhere to the glass surface in a semicircular shape with almost no displacement, as the raindrop volume increases, the shape of raindrops adhering to the glass surface gradually becomes flattened, and the raindrops tend to flow down along the glass; when the vehicle is in a low-speed driving state, all raindrops present an upward moving tendency once the vehicle speed reaches a certain value; when the vehicle is in a high-speed driving state, raindrops move upward, and their morphology changes with the vehicle speed. Moreover, under light rainfall conditions, as the vehicle speed increases, the motion state of raindrops falling on the glass surface changes from adhesion to the glass to upward movement; under moderate rainfall conditions, with the increase of vehicle speed, the motion state of raindrops falling on the glass surface also changes from adhesion to the glass to upward movement, and the raindrop morphology gradually tends to a liquid-film shape.

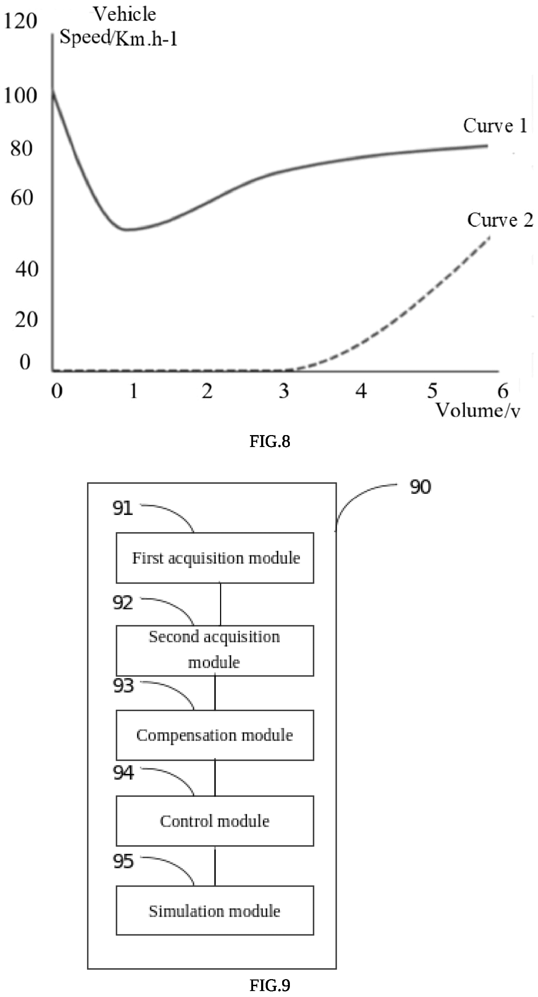

In some embodiments, curve fitting is performed on the information obtained from the model simulation to obtain the schematic diagram of the fitting curve for the critical value of the water droplet adhesion state as shown in FIG. 8. In the range above curve 1, the water droplets adhere to the glass and move upward; in the range below curve 2, the water droplets adhere to the glass and move downward; in the range between curve 1 and curve 2, the water droplets adhere to the glass and remain stationary.

In some embodiments of the present application, it can be proved through model simulation that the adhesion state of raindrops on the glass is affected by vehicle speed and rainfall amount, thereby affecting visual judgment. This provides strong data support for the setting of speed thresholds of various compensation strategies in the wiper control method, and further improves the flexibility of the wiper control method.

FIG. 9 is a schematic structural diagram of a wiper control apparatus provided by some embodiments of the present application. The wiper control apparatus may be the domain controller in some of the above embodiments. Alternatively, the wiper control apparatus may be a component or assembly in the domain controller. The wiper control apparatus provided by some embodiments of the present application may execute the processing flow of the wiper control method provided by the embodiments. As shown in FIG. 9, the wiper control apparatus 90 includes: a first acquisition module 91, a second acquisition module 92, a compensation module 93, and a control module 94. The first acquisition module 91 is configured to acquire driving state information of the vehicle, where the driving state information at least includes the driving speed and acceleration of the vehicle. The second acquisition module 92 is configured to acquire initial control information of the wiper, where the initial control information at least includes the initial sensitivity of the automatic wiper and the first cyclic wiping threshold corresponding to the current rainfall amount. The compensation module 93 is configured to adjust the initial control information based on the driving state information to obtain compensated control information, where the compensated control information at least includes the adjusted sensitivity of the automatic wiper and the adjusted cyclic wiping threshold. The control module 94 is configured to control the wiper to operate based on the compensated control information.

In some embodiments, the compensation module 93 is configured to reduce the initial sensitivity of the automatic wiper and increase the first cyclic wiping threshold to the second cyclic wiping threshold when the driving speed is less than the first speed threshold.

In some embodiments, the compensation module 93 is configured to take the initial control information as the compensated control information when the driving speed is greater than or equal to the first speed threshold and less than the second speed threshold, where the second speed threshold is greater than the first speed threshold.

In some embodiments, the compensation module 93 is configured to increase the initial sensitivity of the automatic wiper and reduce the first cyclic wiping threshold to the third cyclic wiping threshold when the driving speed is greater than or equal to the second speed threshold.

In some embodiments, the compensation module 93 is configured to generate single wiping control information when the driving speed is lower than the third speed threshold and the acceleration is greater than the acceleration threshold, and the accumulated rainfall within a preset time is greater than the fourth cyclic wiping threshold, where the third speed threshold is less than the first speed threshold, the fourth cyclic wiping threshold is less than the second cyclic wiping threshold, and the single wiping control information is used to control the wiper to perform a single wiping action.

In some embodiments, the compensation module 93 is further configured to: when the automatic wiper is in the intermittent wiping mode, start timing from the last wiping action; and generate the single wiping control information if the driving speed is lower than the third speed threshold and the acceleration is greater than the acceleration threshold after a preset time.

In some embodiments, the wiper control apparatus 90 further includes a simulation module 95, configured to perform simulation based on a real vehicle glass model and the Eulerian raindrop model to obtain raindrop adhesion state information. The raindrop adhesion state information includes the influence of rainfall and vehicle speed on the adhesion state of raindrops on the glass.

In some embodiments, the simulation module 95 is specifically configured to: import the real vehicle glass model and establish Eulerian raindrops of multiple preset volumes, control the Eulerian raindrop model to drop onto the surface of the real vehicle glass model at a preset falling speed to obtain the first adhesion state information, the Eulerian raindrops of multiple preset volumes correspond to multiple rainfall amounts respectively, where the first adhesion state information includes the adhesion state of raindrops on the glass under different rainfall amounts; control the real vehicle glass model to move at multiple preset vehicle speeds, and control the Eulerian raindrop model to drop onto the surface of the real vehicle glass model at a preset falling speed to obtain the second adhesion state information, where the second adhesion state information includes the adhesion state of raindrops on the glass under different vehicle speeds.

The wiper control apparatus according to some embodiments of the present application shown in FIG. 9 may be used to execute the technical solutions of the above method embodiments, and its implementation principle and technical effects are similar, which will not be repeated here.

In addition, some embodiments of the present application further provide a vehicle including the wiper control apparatus according to some of the above embodiments.

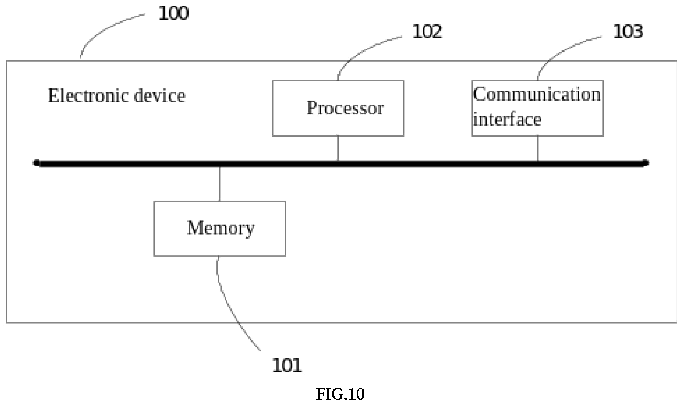

FIG. 10 is a schematic structural diagram of an electronic device provided by some embodiments of the present application. The electronic device may be a key for controlling the vehicle or an on-board device according to some of the above embodiments. The electronic device provided by some embodiments of the present application may execute the processing flow of the wiper control method provided by the embodiments. As shown in FIG. 10, the electronic device 100 includes: a memory 101, a processor 102, a computer program stored in the memory 101, and a communication interface 103. The computer program is configured to be executed by the processor 102 to implement the above wiper control method.

In addition, some embodiments of the present application further provide a non-volatile computer readable storage medium, on which a computer program is stored, and the computer program is executed by a processor to implement the wiper control method of the above embodiments.

In addition, some embodiments of the present application further provide a computer program product, which includes a computer program or instruction, and when the computer program or instruction is executed by a processor, the above wiper control method is implemented.

Computer program code for executing the operations of the present application may be written in one or more programming languages or a combination thereof, including but not limited to object-oriented programming languages, such as Java, Smalltalk, C++, and also including conventional procedural programming languages, such as the "C" language or similar programming languages. The program code may be executed entirely on the user's computer, partly on the user's computer, as an independent software package, partly on the user's computer and partly on a remote computer, or entirely on the remote computer or server. In the case of a remote computer, the remote computer may be connected to the user's computer through any kind of network-including a Local Area Network (LAN) or a Wide Area Network (WAN), or may be connected to an external computer (for example, through the Internet using an Internet service provider).

The flowcharts and block diagrams in the accompanying drawings illustrate the possible implementation architectures, functions, and operations of systems, methods, and computer program products according to various embodiments of the present application. In this regard, each block in the flowchart or block diagram may represent a module, program segment, or part of code, which includes one or more executable instructions for implementing the specified logical function. It should also be noted that in some alternative implementations, the functions marked in the blocks may occur in a different order from that marked in the accompanying drawings. For example, two blocks shown in succession may actually be executed substantially in parallel, or they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs the specified functions or operations, or by a combination of dedicated hardware and computer instructions.

It should be noted that relational terms such as "first" and "second" are only used to distinguish one entity or operation from another entity or operation, and do not necessarily require or imply any such actual relationship or order between these entities or operations. Furthermore, the terms "comprises/includes", "comprising/including" or any other variation thereof are intended to cover a non-exclusive inclusion, such that a process, method, article, or device that comprises a list of elements includes not only those elements but also other elements not expressly listed, or elements inherent to such process, method, article, or device. Without further limitation, an element defined by the phrase "comprising a..." does not exclude the presence of additional identical elements in the process, method, article, or device that comprises the element.

The above are only specific implementations of the present application, enabling those skilled in the art to understand or implement the present application. Various modifications to some embodiments will be apparent to those skilled in the art, and the general principles defined herein may be implemented in other embodiments without departing from the spirit or scope of the present application. Therefore, the present application will not be limited to some embodiments herein, but will conform to the widest scope consistent with the principles and novel features disclosed herein.

## Claims

1. A wiper control method, comprising:
acquiring driving state information of a vehicle, wherein the driving state information at least comprises a driving speed and an acceleration of the vehicle;
acquiring initial control information of a wiper, wherein the initial control information at least comprises an initial sensitivity of the automatic wiper and a first cyclic wiping threshold corresponding to current rainfall amount;
obtaining compensated control information by adjusting, based on the driving state information, the initial control information, wherein the compensated control information at least comprises an adjusted sensitivity of the automatic wiper and an adjusted cyclic wiping threshold; and
controlling the wiper to operate based on the compensated control information.

2. The method according to claim 1, wherein the obtaining compensated control information by adjusting, based on the driving state information, the initial control information comprises:
when the driving speed is less than a first speed threshold, reducing the initial sensitivity of the automatic wiper, and increasing the first cyclic wiping threshold to a second cyclic wiping threshold.

3. The method according to claim 1 or 2, wherein the obtaining compensated control information by adjusting, based on the driving state information, the initial control information comprises:
when the driving speed is greater than or equal to the first speed threshold and less than a second speed threshold, taking the initial control information as the compensated control information, wherein the second speed threshold is greater than the first speed threshold.

4. The method according to any one of claims 1 to 3, wherein the obtaining compensated control information by adjusting, based on the driving state information, the initial control information comprises:
when the driving speed is greater than or equal to the second speed threshold, increasing the initial sensitivity of the automatic wiper, and reducing the first cyclic wiping threshold to a third cyclic wiping threshold.

5. The method according to any one of claims 1 to 4, wherein the compensated control information further comprises single wiping control information, the obtaining compensated control information by adjusting, based on the driving state information, the initial control information comprises:
when the driving speed is lower than a third speed threshold and the acceleration is greater than an acceleration threshold, generating the single wiping control information in response to accumulated rainfall amount within a preset time being greater than a fourth cyclic wiping threshold, wherein the third speed threshold is less than the first speed threshold, the fourth cyclic wiping threshold is less than the second cyclic wiping threshold, and the single wiping control information is used for controlling the wiper to perform a single wiping action.

6. The method according to claim 5, wherein the obtaining compensated control information by adjusting, based on the driving state information, the initial control information further comprises:
in an intermittent wiping mode of the automatic wiper, starting timing from a last wiping action;
generating the single wiping control information in response to the driving speed being less than the third speed threshold and the acceleration being greater than the acceleration threshold upon expiration of a preset time.

7. The method according to any one of claims 1 to 6, wherein before acquiring the driving state information of the vehicle, the method further comprises:
obtaining raindrop adhesion state information by performing simulation according to a real vehicle glass model and an Eulerian raindrop model, wherein the raindrop adhesion state information comprises influences of rainfall amount and vehicle speed on an adhesion state of the raindrop on glass.

8. The method according to claim 7, wherein the raindrop adhesion state information comprises first adhesion state information and second adhesion state information;
the obtaining raindrop adhesion state information by performing simulation according to the real vehicle glass model and the Eulerian raindrop model comprises:
importing the real vehicle glass model and establishing Eulerian raindrops with multiple preset volumes, controlling the Eulerian raindrop model to drop onto a surface of the real vehicle glass model at a preset falling speed to obtain the first adhesion state information; wherein the Eulerian raindrops with multiple preset volumes correspond to multiple rainfall amounts respectively, and the first adhesion state information comprises adhesion states of raindrops on glass under different rainfall amounts; and
controlling the real vehicle glass model to move at multiple preset vehicle speeds, and controlling the Eulerian raindrop model to drop onto the surface of the real vehicle glass model at the preset falling speed to obtain the second adhesion state information, wherein the second adhesion state information comprises adhesion states of raindrops on glass under different vehicle speeds.

9. A wiper control apparatus, comprising:
a first acquisition module, configured to acquire driving state information of a vehicle, wherein the driving state information at least comprises a driving speed and an acceleration of the vehicle;
a second acquisition module, configured to acquire initial control information of a wiper, wherein the initial control information at least comprises an initial sensitivity of the automatic wiper and a first cyclic wiping threshold corresponding to current rainfall amount;
a compensation module, configured to obtain compensated control information by adjusting, based on the driving state information, the initial control information, wherein the compensated control information at least comprises an adjusted sensitivity of the automatic wiper and an adjusted cyclic wiping threshold; and
a control module, configured to control the wiper to operate based on the compensated control information.

10. An electronic device, comprising:
a memory;
a processor; and
a computer program;
wherein the computer program is stored on the memory and configured to be executed by the processor to implement the method according to any one of claims 1 to 8.

11. A non-volatile computer-readable storage medium, storing with a computer program that, when executed by a processor, implements the method according to any one of claims 1 to 8.

12. A vehicle, comprising:
the wiper control apparatus according to claim 9; or
the electronic device according to claim 10; or
the non-volatile computer-readable storage medium according to claim 11.
